# EUROPEAN PATENT APPLICATION

(11) **EP 0 989 659 A2**
(43) Date of publication of application: **29.03.2000**
(21) Application number: 99117574.6
(22) Date of filing: 06.09.1999
(51) Int. Cl.: H02K 15/08

(54) **Apparatus and methods for holding a wire in an armature winding machine**

(30) Priority: 22.09.1998 US 101352 P; 09.08.1999 US 371156
(71) Applicant: AXIS S.p.A., 50028 Tavarnelle Val di Pesa (Firenze) (IT)
(72) Inventor: Stratico, Gianfranco, 53100 Siena (IT); Randazzo, Antonio, 30026 Portogruaro (Venezia) (IT); Mugelli, Maurizio, Ulignano, 53037 San Gimignano (Siena) (IT); Sbrilli, Fabrizio, 53036 Poggibonsi (Siena) (IT)
(74) Representative: Lotti, Giorgio

(57) **Abstract**

Methods and apparatus for gripping a wire in a winding machine for winding dynamo-electric machine components are provided. The apparatus includes a wire holding assembly mounted for selective rotational movement with respect to the winding machine. The assembly includes a gripping portion for releasably gripping the wire extending between a terminal of the dynamo-electric core and a winding apparatus. The wire assembly may be selectively rotated to angularly align the gripping portion with respect to the wire.

## Description

This application claims the benefit of U.S. Provisional application No. 60/101,352, filed September 22, 1998.

### Background of the Invention

The present application relates to apparatus and methods for handling wire leads in a machine for winding components of dynamo-electric machines, such as armatures or stators of electric motors.

Typical prior art armature winders are described in commonly-assigned U.S. Patent 5,127,594 to Lombardi et al., U.S. Patent 5,257,745 to Lombardi et al., and Stratico U.S. Patent Application No. 09/323,304, filed June 1, 1999, each of which is incorporated by reference in its entirety herein.

Wire grippers have been employed in the prior art winders to grasp and hold the wires, which have been delivered from two flyer arms. A typical prior art wire gripper is described in U.S. Patent 3,927,843 to Dammar, which is incorporated by reference in its entirety herein. Wire grippers typically grasp and hold the wires at the completion of winding of the armature. More particularly, at this stage of manufacture, the flyers of the winder have substantially finished winding the coils to the armature. Subsequently, the final leads are "terminated," or attached, to the commutator, typically by wrapping around a tang of the commutator. After termination, each of the two wires extends from the commutator to the respective flyer. According to this procedure, each wire gripper grasps a respective wire at a point between the commutator and the flyer, and nearer to the commutator. Each wire gripper holds the respective wire which it has grasped so that the wire does not run out of the gripping portion.

A first shearing step may occur wherein each of the wire grippers, holding a respective wire, moves to a distant location spaced apart from the armature. For winders winding thin wires, the grippers pull the wire in order to shear it against an edge of the commutator during this movement (e.g., the edge of a tang where the wire has been previously terminated), or against specialized cutting apparatus provided on the armature holding apparatus. For winders winding thicker wire, i.e., wires which cannot be sheared by the pull of the grippers, cutters are present to shear a respective wire between the commutator and the gripper, once the gripper has moved to its distant position to add tension to the wire.

The end result, after the first shearing step, is that each wire is being held at one end by a wire gripper, and the other end extends to its respective flyer. According to this apparatus and procedure, the completely wound armature has been freed from the wires, and can be unloaded from the winder. This armature is replaced on the winding machine by a new armature that needs to be wound.

Once the new armature has been positioned between the flyers, in its position for winding, a next step is for the wires extending between the wire grippers and the flyers to become terminated to start points on the commutator (e.g., first tangs). This process of termination occurs by rotating the flyer into position and the use of well-known tooling present in the winder. After termination, a portion of the wire extends between the commutator and the flyer to commence winding, and another portion of the wire extends between the start points of the commutator and the wire grippers.

During a second shearing step, the portion of wire extending between the commutator and the wire grippers becomes sheared between the start points of the commutator and the grippers, very near to the start points of the commutator, either by pulling the wires or by using cutters, as described above. After cutting the waste portions, winding the armature may begin. The grippers are consequently in a condition in which they are holding respective waste portions of wire. Waste portions of wire have been created by the two shearing operations described in the foregoing to free the wound armature and to allow the new armature to be wound. Waste portions, held by the grippers, must be removed from the grippers and placed in a waste bin, without impeding the winding operations.

The typical prior art wire gripping apparatus has a limited range of motion for shearing the wire and for disposing of waste portions of the wire after shearing. Moreover, in order to perform the shearing process, the prior art wire gripping apparatus requires particular coordination of movement with an armature shielding and supporting apparatus, and may require the armature shielding and supporting apparatus to provide specific cutting devices.

It is therefore an advantage of the present invention to provide an effective wire gripping apparatus for grasping and disposing of wire.

It is also an advantage of the present invention to provide a wire gripping apparatus having a wide range of motion for operating with armatures of different sizes and a variety of armature gripping and shielding apparatus.

### Summary of the Invention

In accordance with the invention, there is provided a machine for winding dynamo-electric machine components, such as an dynamo-electric core. The winding machine may include machine components, e.g., apparatus for supporting a dynamo-electric core and for dispensing and winding a wire coil about the dynamo-electric core. The novel apparatus provides a wire holding assembly movably mounted to the winding machine. The assembly includes a gripping portion for releasably holding a portion of a wire. By selectively moving the wire holding assembly with respect to the winding machine, the gripping portion may be moved to a plurality of positions.

In a preferred embodiment, the wire holding assembly may be selectively, rotatably movable about an axis of the dynamo-electric core held by the apparatus for holding. The apparatus may also be programmably and selectively rotatable in order to position the wire holding assembly in a selected angular position. Moreover, wire holding assembly may be selectively moved along the axis of the dynamo-electric core, such that the gripping portion is relatively movable with respect to the dynamo-electric core, and with respect to the apparatus for winding the wire about the dynamo-electric core.

In accordance with the principles of this invention, the selective rotation of the wire holding assembly permits positioning of the gripping assembly to grasp and hold to a wire in a specified location. For example, when the wire is installed between a tang of the commutator and the apparatus for dispensing wire and wrapping the wire around the dynamo-electric core, the wire holding assembly may be selectively rotated to angularly position the gripping portion with respect to the wire portion. The wire holding assembly may also be selectively moved to position the gripping portion to grasp a free end portion of a wire, resulting from a breakage of the wire typically extending between the terminal of the dynamo-electric core and the winding apparatus.

Moreover, the wire holding assembly may be driven into position that allows access for removing or mounting one or more additional machine components, such as, e.g., armature shielding and supporting apparatus, in accordance with the invention. Further in accordance with the invention, the selective rotation of the wire holding assembly permits positioning of the gripping portion with respect to a receptacle in order to release severed portions of the wire into the receptacle.

### Brief Description of the Drawings

The above and other objects of the invention will be apparent upon consideration of the following detailed description, taken in conjunction with the accompanying drawings in which:
FIG. 1 is a side elevation view of an apparatus in accordance with the invention.
FIG. 1(a) is a view in partial section taken from line 1a-1a of FIG. 1, of a portion of the apparatus in accordance with the invention.
FIG. 2 is an elevational end view from line 2-2 of FIG. 1 in accordance with the invention, wherein the armature has been omitted from the FIG.
FIG. 3 is a perspective view of the apparatus of FIG. 1, in accordance with the invention.
FIG. 4 is an elevational view from direction 4 of FIG. 2, with a partial sectional view taken through line 4'-4', in accordance with the invention.
FIG. 5 is an elevational end view similar to the view of FIG. 2, illustrating the apparatus in a different position and additional apparatus in accordance with the invention.
FIG. 6 is an elevational view taken from the direction of FIG. 1, illustrating the mounting of the apparatus of FIG. 1 with respect to armature winding apparatus, in accordance with the invention.
FIG. 6(a) is an enlarged sectional view taken along line 6'-6' of FIG. 2.
FIG. 7 is an enlarged elevational end view, illustrating the position of the wire in relation to the armature and the winder, in accordance with the invention.
FIG. 8 is a view similar to FIG. 7, illustrating the wire and the winder in a different position with respect to the armature.

### Detailed Description of the Preferred Embodiments

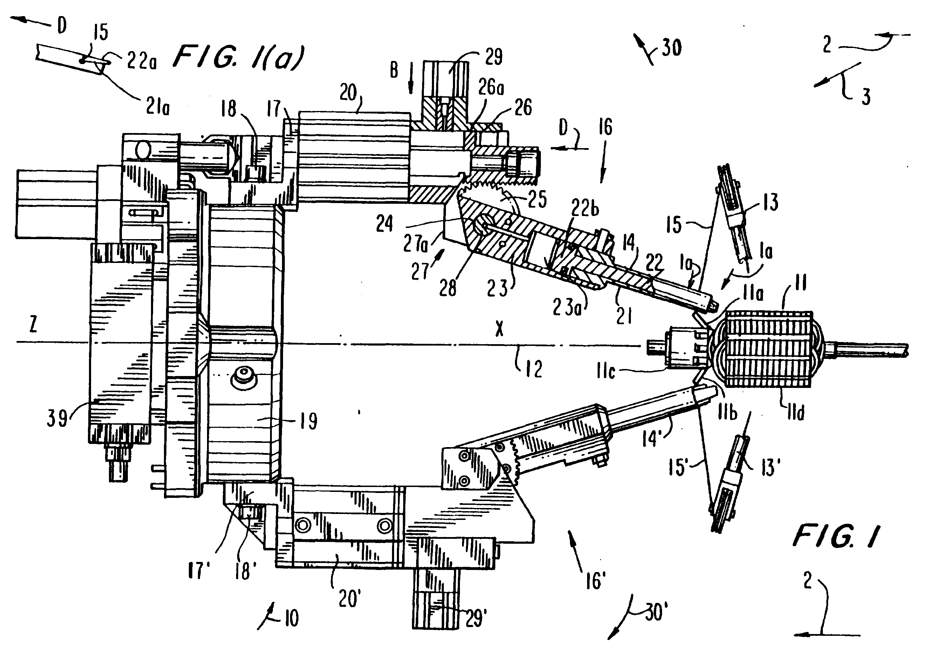

FIG. 1 illustrates a wire holding assembly 10 for a flyer winder machine in accordance with the invention. The flyer winder machine may include other machine components, such as armature winding and shielding assembly, such as that described in U.S. application 09/323,304, incorporated by reference, above. As illustrated in FIG. 1, the armature 11 is shown aligned with main axis 12 of the winder. The wire holding assembly 10, as will be described in greater detail below, may be mounted to a flyer winder machine for selective rotational movement about the armature, and, more particularly, about axis 12. The description of the invention will refer to an armature for convenience; however, it is understood that any dynamo-electric core, such as a brushless stator, may be used with the invention as described. This position of the armature is advantageous for the processes of winding and termination of the wire coils by the winder. For sake of clarity, in FIG. 1 flyer arms 13 and 13', which dispense the wire to the armature and wind the wire about the armature, have been shown in partial representation. Again, for the sake of clarity, devices for holding the armature and shielding the commutator such as those described in U.S. application 09/323,304, which would typically be present for winding and termination in areas X and Z, are not illustrated in FIG. 1. It is understood that the device for holding and shielding the armature described in U.S. application 09/323,304 is merely illustrative, and other devices for serving that purpose are contemplated for use with the present invention.

With reference to FIGS. 1-5, and in particular to FIG. 1, exemplary grippers for grasping and holding the wires have been referenced with numbers 14 and 14'. Gripper 14 grasps and holds wire 15 leading to flyer 13. Similarly, gripper 14' grasps and holds wire 15' leading to flyer 13'. Wire 15 has been terminated to tang 11a of a commutator 11c, and wire 15' has been terminated to tang 11b.

Gripper units 16 and 16' are attached to respective support brackets 17 and 17' respectively, which in turn are attached, for example, by means of bolts 18 and 18', respectively, to support ring 19. In a preferred embodiment, the attachment of these gripper units 16/16' to the support brackets 17/17' may be achieved by bolting the rear end of air cylinders 20 and 20', respectively, to support brackets 17 and 17'.

For sake of clarity, constructional and functional information will be described concerning gripper unit 16 having gripper 14, only. Gripper unit 16' having gripper 14', is substantially identical to gripper unit 16 in terms of construction and function, such that discussion of gripper unit 16 generally applies to gripper unit 16', as well.

FIG. 1 illustrates gripper unit 16 in a partial section view. FIG. 1(a) is an enlarged view of the end portion of gripper 14. As illustrated in FIG. 1(a), gripper 14 includes a cylindrical sheath 21 and rod 22. The forward end of sheath 21 is provided with a slanted abutment portion 21a. The forward end of rod 22 is provided with slanted abutment portion 22a. Abutment portions 21a and 22a confront each other, in a substantially parallel manner, so that wire 15 can be held between them.

As illustrated in FIG.1, rod 22 is slidable within sheath 21. Consequently, the wire 15 may be pressed between abutment portions 21a and 22a (FIG. 1(a)). A sufficient pressing action by rod 22 will maintain the wire firmly held between portions 21a and 22a. When rod 22, and hence abutment portion 22a, is retracted in direction D, abutment portion 21a is exposed to grasp the wire. Once the wire has been brought against abutment portion 21a, rod 22 is extended oppositely to direction D so that the wire becomes trapped and held firmly between abutment portion 21a and 22a as shown in FIG. 1(a). It is understood that the gripper 14 configuration described herein is exemplary, and alternative configurations to grasp the wire are contemplated, e.g., pivotable grasping fingers or hook configurations.

With continued reference to FIG. 1, the rear end 22b of rod 22 is enlarged, and provided with seals so that it may act as a piston in cylinder portion 23a of support arm 23. Support arm 23 is fixed with respect to axle 24. Axle 24 may have passages for the supply of pressurised air to either side of the enlarged portion of rod 22, which is within cylinder portion 23a. The supply of this pressurised air will move rod 22 in direction D, or oppositely to direction D, depending on which side of the enlarged portion supplied. (Fork structure 27 also includes air cylinder 29. The piston rod of air cylinder 29 can protrude into fork structure 27.)

Support arm 23 may be pivotably supported by fork structure 27. Fork structure 27 may be fixed with respect to the front end of air cylinder 20. More particularly, axle 24 of support arm 23 may be supported by sides 27a and 27b of fork structure 27. This preferred configuration allows support arm 23, and thus gripper 14, to pivot about axis 28 of axle 24 (which extends perpendicularly out of the plane of FIG. 1). Gear sector 25 is fixed with respect to support arm 23 and pivotable therewith. Rack 26 is movable in direction D and oppositely to direction D. Rack 26 may be bolted to the end portion of the piston rod of cylinder 20 and be movable therewith. Gear sector 25 preferably intermeshes with rack 26. Rack 26 may be guided to move along the inside surface of fork structure 27.

By moving the piston rod of air cylinder 20, rack 26 advances longitudinally, and rotates gear sector 25 by intermeshing with gear sector 25. Consequently, gripper 14 pivots about axis 28 of axle 24 and moves with respect to the armature. More particularly, movement of cylinder 20 in direction D causes gripper 24 to pivot in direction 30. Similarly, gripper 14' can be made to pivot in direction 30' by the use of cylinders 20' and 29'.

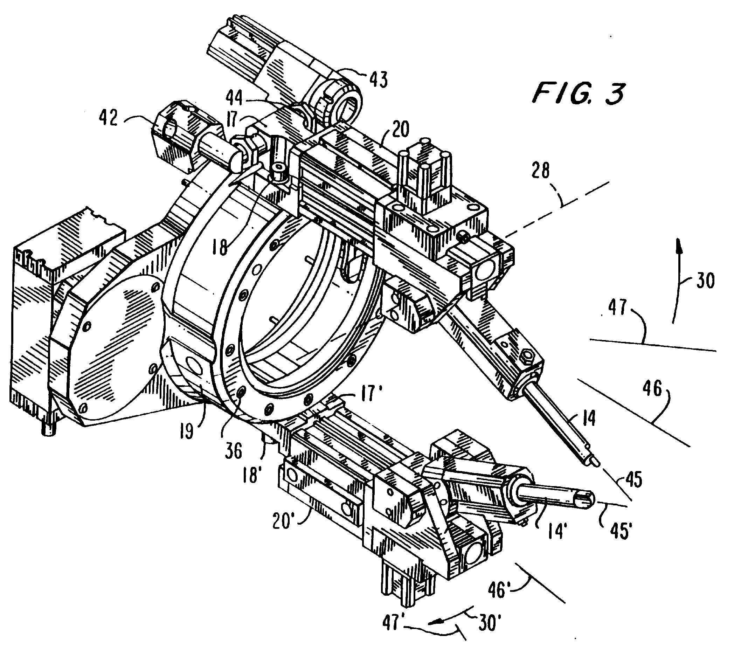

Gripper 14 is pivotable about axis 28 through a range of motion, including three selected positions along such range of motion, i.e., 45, 46 and 47. (Similarly, gripper 14' pivots through a range of motion including positions 45',46', and 47'.) A forward position may be that in which the grippers 14 and 14' are respectively located at positions 45 and 45' (see, FIG. 3). These positions are relatively close to the armature, and may allow grippers 14 and 14' to grasp, respectively, wire 15 extending from flyer 13, and wire 15' extending from flyer 13', after termination of tangs 11a and 11b.

With continued reference to FIG. 1, rack 26 is provided with a raised portion, such as abutment protuberance 26a. The piston rod of air cylinder 29 is movable in direction B, and is illustrated out of fork structure 27. However, abutment protuberance 26a and the piston rod of air cylinder 29 may engage when the piston rod of air cylinder 29 protrudes into fork structure 27 and the piston rod of cylinder 20 is retracted in direction D from its fully extended position (not shown in the FIG.). As described above, retraction of the piston rod of cylinder 20 causes gripper 14 to swing in direction 30. When the rod of piston 29 is extended into fork structure 27, protuberance 29a will engage the rod of piston 29 and prevent further movement of gripper 14 in direction 30.

When the travel of grippers 14 and 14' are stopped in this way, they may be located at intermediate positions 46 and 46' (see, FIG. 3) which are positions spaced further away from the armature than positions 45 and 45'.

By retracting the piston rod of air cylinder 29 out of fork structure 27, and further retracting the piston rod of air cylinder 20, gripper 14 may be pivoted even further from the armature in direction 30 to position 47, for example. Similarly gripper 14' can be located at position 47' (see, FIG. 3). Movement of gripper 14 in direction 30 or opposite to direction 30 about axis 28 represents a degree of freedom in the range of motion of the present invention with respect to the armature. Similarly, movement of gripper 14' in direction 30' or opposite direction 30' represents a degree of freedom.

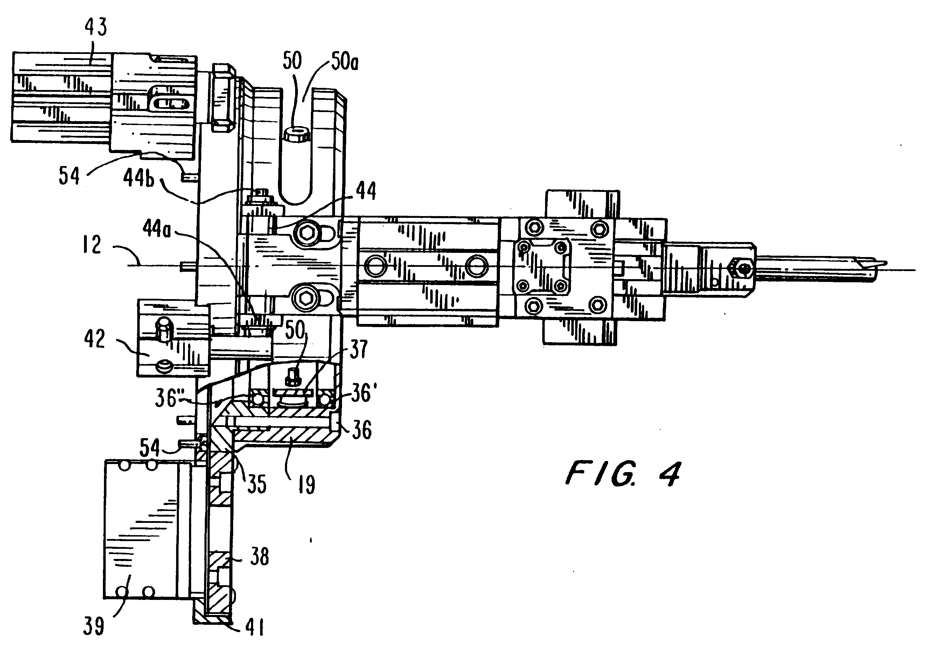

With reference to FIG. 4, support ring 19 may be connected to main gear 35 by a flange connection using bolts 36. Support ring 19 and main gear 35 are supported for angular rotation around main axis 12 of the winder, by being mounted on ball bearings 36' and 36''. These ball bearings may be maintained at a required distance apart from each other by spacer means, such as spacer ring 37. The bolt connection to join main gear 35 to support ring 19 pushes the ball bearings toward each other, while spacer 37 maintains separation. A drive unit, such as air cylinder 39, is fixed to casing 41. Pinion gear 38 is fixed to the output shaft of air cylinder 39, and meshes with main gear 35. Air cylinder 39, when pressurised, causes its output shaft to rotate either in one or the other of two opposite rotation directions. This causes pinion gear 38 to rotate as well. As a result of the intermeshing of main gear 35 with rotating pinion gear 38, main gear 35 and support ring 19 will rotate either in directions 38' and 38'' around main axis 12. Grippers 14 and 14', which are attached to ring 19, will also move in direction 38' or 38'' with ring 19.

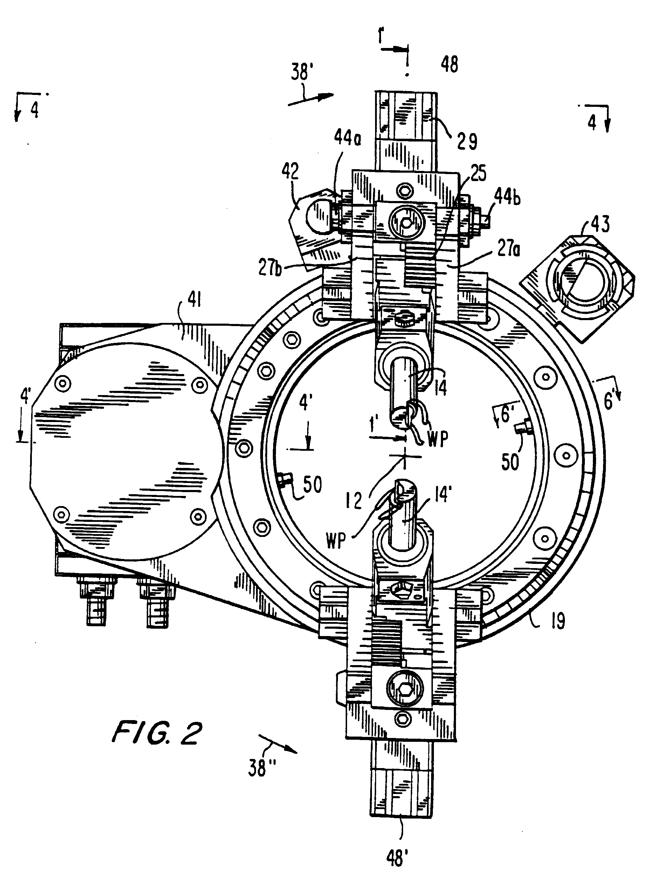

Stop units 42 and 43 are also supported on casing 41. Support bracket 17 has on its rear end shock absorber 44 with contact pins 44a and 44b that extend substantially tangentially to the directions 38' and 38'' of rotation. As illustrated in FIG. 2, contact pin 44a may abut against a rod of stop unit 42 to stop rotation of support ring 19 (and to absorb the consequential vibrations) when rotation occurs in direction 38'', and contact pin 44b may abut against an extendable rod of stop unit 43, to stop rotation of support ring 19 (and to absorb the consequent vibrations) when rotation occurs in direction 38'.

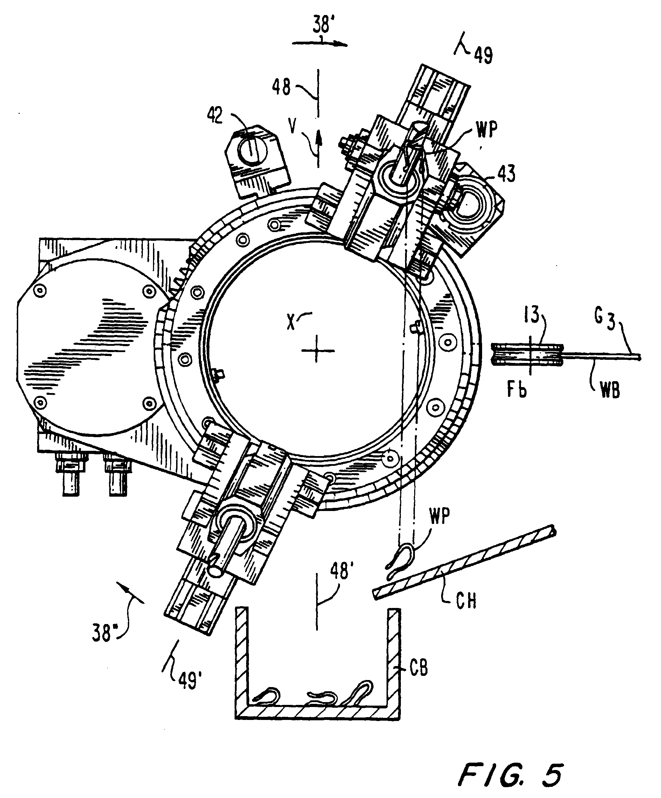

The rotation of support ring 19 about axis 12 provides grippers 14 and 14' with a range of motion in another direction, i.e., angular motion about the armature. This range of motion includes at least two positions, i.e., positions 48 and 49 for gripper 14 and positions 48' and 49' for gripper 14'. When support ring 19 is stopped by stop unit 42, grippers 14 and 14' are positioned at positions 48 and 48', respectively, as shown in FIG. 2. Conversely, when support ring 19 is stopped by stop unit 43, grippers 14 and 14' are positioned at positions 49 and 49', respectively, as shown in FIG. 5.

The functions of grippers 14 and 14', in the various positions 45, 46, 47, 48 and 49 (respectively for gripper 14) and 45', 46', 47', 48' and 49' (respectively for gripper 14') will now be described.

Following termination of the wire to the final tang 11a, gripper 14 may be at position 45 with respect to a first direction of movement (e.g., pivoting movement about axis 28) and at position 48 with respect to a second direction of movement (e.g., angular movement about axis 12), and grasps the wire coming from the tang 11a and leading to the flyer. While holding wire 15, gripper 14 moves in one direction of movement to position 46 further apart from the armature, while still remaining in position 48. This causes the wire being held by the gripper to become taut so that it can be sheared near to the tang by the pull of the gripper or by the cutter. The degree of tautness necessary to cut the wire may be determined by one skilled in the art, taking into account the characteristics of the wire, the cutting surface, and other factors. Gripper 14 remains in position 46 during unloading of a wound armature and loading of a new armature. Later gripper 14 will return to position 45 for grasping wire 15 after it has been terminated to the first tang, such as tang 11a, of a new armature. Once the wire has been terminated to the first tang and has been grasped by gripper 14, gripper 14 then moves to position 47 (see, FIG. 3), for shearing and for being at a distant position from the central area where the flyers accomplish their orbits of rotation.

After this operation, gripper 14 will be holding in position 47 a waste piece WP of wire produced by the two shearing operations, described in the foregoing, to free the wound armature and terminate the new armature on the first tang. Gripper 14' accomplishes, for a tang such as tang 11b, similar operations to those described for gripper 14. The operations for grippers 14 and 14' may occur simultaneously. At the end of these operations, gripper 14' may also have a waste piece WP when it is in position 47'. Support ring 19 is then rotated to selectively bring gripper 14 to position 49, and gripper 14' to position 49', as shown in FIG. 5. Once this situation has been reached, gripper 14 may release waste piece WP so that it passes to a receptacle, such as collecting bin CB, which may have a conveying structure, such as chute CH, to direct the waste portion WP into the collecting bin CB. The receptacle may be configured such that chute CH is not required (e.g., collecting bin CB may be wider). Gripper 14' may release the waste piece WP which it is holding when it is still in position 48', because gripper 14' is positioned with respect to collecting bin CB, i.e., collecting bin CB is directly below.

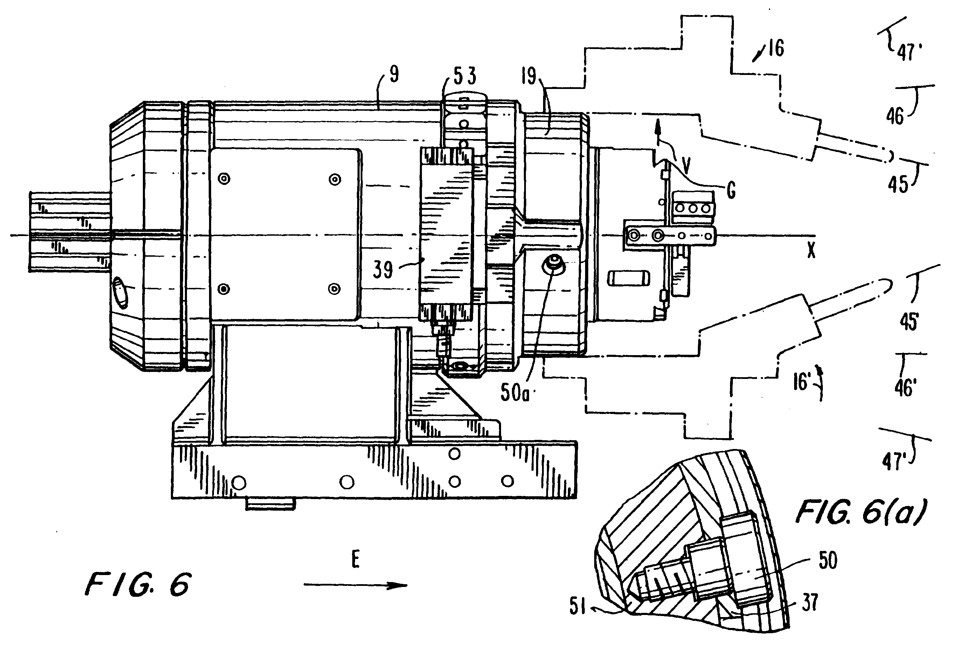

Bringing grippers 14 into positions 49 and 47 leaves room in area X and along vertical direction V (see FIGS. 5 and 6) to allow dismounting and reassembly of the shielding and armature gripping tooling (not shown in the FIGS.), which may be located in area X. Tooling useful for this purpose has been described, for example, in U.S. application 09/323,304. This tooling may be removed by moving it in direction V, to be dismounted, and opposite to direction V to be reassembled as has been described in U.S. application 09/323,304.

FIG. 6 shows that such tooling has been removed from winder from area X by sliding its connection portion through groove G, during movement in direction V. In FIG. 6, gripper unit 16 (illustrated in dashed line) is depicted in an exemplary position with respect to the tooling to be removed in direction V. The rotational mounting of wire holding assembly 10 (including gripper unit 16) with respect to unit 9 (the base portion of the winding machine), allows gripper unit 16 to be selectively driven to a position or configuration which provides additional access to allow removal or mounting of one or many components of the tooling to unit 9.

The rotational movement of grippers 14 and 14' is selectively controllable to allow grippers 14 and 14' to be rotated to any angular position with respect to axis 12. For example, air cylinder 39 may be substituted by an electric motor, which is controlled to stop for programmable and desired positions of rotations in directions 38' and 38''. This selective movement may not require the use of stop units 42 and 43, and shock absorber 44, and allows the possibility of stopping grippers 14 and 14' at many angular positions around axis 12.

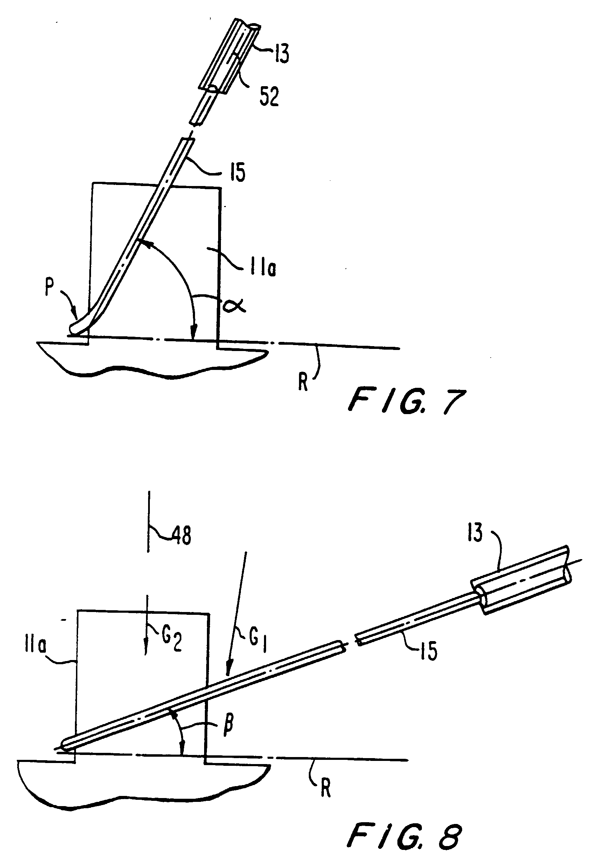

The rotational mounting allows the grippers to move to predetermined positions around axis 12, which can also optimize shearing of the wire against a tang edge by the pulling with the grippers. FIG. 7, which is a view of tang 11a from stack lid of the armature, shows wire 15 extending to winder 13 that is to be sheared at point P (against the edge of the tang 11a). With reference to FIG. 7 in conjunction with FIG. 1, the longitudinal position of the gripper 14 (and similarly for gripper 14', not shown in FIG. 7) is between tang 11a and lamination stack 11d. By rotating grippers 14 and 14' around axis 12, an ideal angle α (alpha), formed by the wire being gripped with a reference axis R, can be formed to shear the wire correctly along the edge of the tang.

Another application of the rotation of grippers 14 and 14' around axis 12 is shown in FIG. 8 for a tang, such as tang 11a. As described above for FIG. 7, the longitudinal position of the gripper is between the tang 11a and the lamination stack 11d. For the case shown in FIG. 8, which is typical of a wide four pole armature, angle β (beta), formed by the wire going to the flyer and a reference axis R, is very small due to the large orbit of rotation used by the flyers. For typical, smaller flyer orbits, i.e., for larger values of angle β (beta), the gripper would be in position 48, partially between the wire and tang 11a, to grasp and hold the wire in direction G2. However, in the case of FIG. 8, the limited access between the wire 15 and tang 11a may make gripping the wire 15 in direction G2 difficult. According to the invention, the gripper may be selectively rotated around axis 12 to a better position to grasp the wire, such as direction G1.

Similar principles, which have been described with reference to FIGS. 7 and 8 for the operations of gripper 14 in relation to tang 11a, apply for gripper 14' in relation to tang 11b.

FIG. 6 shows wire holding assembly 10 mounted on unit 9 of the armature winder. Unit 9 may contain additional tooling, such as the apparatus described in U.S. Patent 5,137,221, which is hereby incorporated by reference herein, and U.S. application 09/323,304, incorporated by reference above, for actuating the shield tubes and grippers required for positioning and indexing the armature.

Wire holding assembly 10 (represented in dotted line) has been mounted on unit 9 by sliding the inner rings of ball bearing 36' and 36'' (not shown in main view of FIG. 6, because contained within support ring 19) on a cylindrical collar 51 (see, FIG. 6(a)) of unit 9. The cylindrical collar extends parallel to main axis 12. As illustrated in greater detail in FIG. 6(a), radial screws 50, which are screwed into the cylindrical collar 51, press on spacer 37 to maintain the bearings fixed in place on the cylindrical collar 51. Apertures 50a are present on support ring 19 to allow screws 50 to be screwed into cylindrical collar 51. Referencing and final fixing of the gripper assembly on the cylindrical collar occurs by screwing screws 54 of casing 41 into an abutment flange 53 extending from the cylindrical collar (FIGS. 4 and 6). The mounting of wire holding assembly 10 to casing 41 in this manner allows the entire gripping assembly to be mounted or removed from casing 41 as a unit.

Unit 9 may be movably mounted with respect to the flyer winders in the direction E by the use of a track or other mechanism known in the art. The possibility of placing grippers 14 and 14' in various angular positions around axis 12, and stopping them in positions during rotation in direction 30 and 30', combined within the possibility of selectively moving unit 9 in direction E, or opposite to direction E (see FIG. 6) i.e., toward or away from the flyer orbits, allows the grippers to grasp and hold wires that are still in condition to leave the flyer, but have become accidentally broken at the armature. A situation like this is shown in FIG. 5 where the wire WB has been broken at the armature, which results in a free end portion G3 at the location of breakage but is still supported by flyer 13 at the other end portion. In FIG. 5, flyer 13 has been rotated to a horizontal position to present wire WB as shown. Gripper 14 can rotate in direction 38' or 38'' about axis 12, pivot in rotation direction 30 or its opposite direction, and be shifted longitudinally, by moving unit 9 in direction E to grasp and hold wire WB adjacent free end portion G3. Once this has been achieved gripper 14 can be moved again with any combination of such motions, or their opposites, to bring wire WB in a predetermined position to reset the winder after a wire breakage. If required, gripper 14' can do the same to recover a broken wire still supported by flyer 13'.

It will be understood that the foregoing is only illustrative of the principles of the invention, and that various modifications can be made by those skilled in the art without departing from the scope and spirit of the invention. For example, it is understood that the mechanisms illustrated to move the gripper apparatus in the various directions of movement and axes of rotation are exemplary, and it is contemplated that any combination of electrical motors and hydraulic pistons under open loop or feedback control may be utilized to position the gripper assemblies with respect to the wires and terminal tangs.

## Claims

1. Apparatus in a machine for winding dynamo-electric components having a plurality of machine components including means for supporting a dynamo-electric core having an axis and means for winding a wire coil about the dynamo-electric core, wherein a portion of a wire extends between a terminal of the dynamo-electric core and the means for winding the wire coil, the apparatus comprising:
a wire holding assembly having a gripping portion configured to hold the wire portion extending between the terminal of the dynamo-electric core and the means for winding the wire coil, the wire holding assembly mounted for selective rotational movement about the axis of the dynamo-electric core to angularly align the gripping portion with the wire.

2. The apparatus defined in claim 1, wherein the wire holding assembly is configured for selective rotational movement to position the gripping portion of the wire holding assembly adjacent a free end portion of the wire, wherein said free end portion is at a location of breakage of the wire.

3. The apparatus defined in claim 2, wherein the dynamo-electric core is held by the means for supporting along a longitudinal axis, and wherein the wire holding assembly is mounted for selective rotational movement about the longitudinal axis with respect to the dynamo-electric core.

4. The apparatus defined in claim 3, wherein a portion of the wire holding assembly is mounted for selective longitudinal movement with respect to the dynamo-electric core.

5. The apparatus defined in claim 3, wherein a portion of the wire holding assembly is mounted for selective longitudinal movement with respect to the means for winding the wire coil about the dynamo-electric core.

6. The apparatus defined in claim 1, further comprising:
rotational stopping means configured to stop said rotational movement of the wire holding assembly about the dynamo-electric core when the assembly reaches a predetermined angular position.

7. The apparatus defined in claim 1, wherein the wire holding assembly is configured for mounting as a unit with respect to the winding machine.

8. The apparatus defined in claim 1, wherein the machine components of the winding machine are configured for removal from the winding machine, further comprising:
a drive for providing said selective rotational movement to the wire holding assembly with respect to at least one of the machine components to provide access for removal of the machine component from the winding machine.

9. Apparatus in a machine for winding dynamo-electric components having means for supporting a dynamo-electric core having an axis, means for winding a wire coil about the dynamo-electric core, and a receptacle for receiving a severed portion of a wire, the apparatus comprising:
a wire holding assembly configured to releasably hold a severed portion of a wire, and mounted for selective rotational movement with respect to the axis of the dynamo-electric core to angularly align a portion of the wire holding assembly and the severed wire portion held thereby with the receptacle such that the wire holding assembly may release the severed wire portion into the receptacle.

10. The apparatus defined in claim 2, wherein the receptacle comprises conveying means to direct the portion of the wire after release from the wire holding assembly to the receptacle.

11. A method for manipulating a wire portion in a winding machine for winding dynamo-electric components having a plurality of machine components including means for supporting a dynamo-electric core and means for winding a wire coil about the dynamo-electric core, wherein the wire portion extends between a terminal of the dynamo-electric core and the means for winding the wire coil, comprising:
providing a wire holding assembly mounted for selective rotational movement with respect to the dynamo-electric core and having a gripping portion for holding the wire portion; and
selectively rotating the wire holding assembly with respect to the wire portion extending between the terminal and the means for winding the wire coil to angularly align the gripping portion with the wire portion.

12. The method defined in claim 12, further comprising:
selectively rotating the gripping portion of the wire holding assembly to an angular position adjacent a free end portion of the wire, wherein said free end portion is at a location of breakage of the wire.

13. The method defined in claim 12, wherein the dynamo-electric core is held by the means for supporting along a longitudinal axis thereof, and wherein the selectively rotating the wire holding assembly comprises selectively rotating the wire holding assembly about the longitudinal axis with respect to the dynamo-electric core.

14. The method defined in claim 13, wherein the dynamo-electric core is mounted for selective longitudinal movement, further comprising:
selectively longitudinally moving the wire holding apparatus with respect to the dynamo-electric core.

15. The method defined in claim 13, wherein the dynamo-electric core is mounted for selective longitudinal movement, further comprising:
selectively longitudinally moving the wire holding apparatus with respect to the apparatus for dispensing the wire.

16. The method defined in claim 12, wherein machine components of the winding machine are configured for removal from the winding machine, and wherein the wire holding assembly comprises a drive for providing said selective rotational movement, the method further comprising:
selectively driving the wire holding assembly to an angular position with respect to at least one of the machine components to provide access for said removal of said machine component from the winding machine.

17. A method for manipulating a wire portion in a winding machine for winding dynamo-electric components having means for supporting a dynamo-electric core and a receptacle for receiving severed portions of the wire coil, comprising:
providing a wire holding assembly mounted for selective rotational movement with respect to the dynamo-electric core and having a gripping portion for releasably holding a severed wire portion;
selectively rotating the gripping portion to angularly align the gripping portion and the severed wire portion held thereby with respect to the receptacle; and
releasing the severed wire portion from the gripping portion to the receptacle.
